# EUROPEAN PATENT APPLICATION

(11) **EP 1 750 031 A2**
(43) Date of publication of application: **07.02.2007**
(21) Application number: 06016458.9
(22) Date of filing: 07.08.2006
(51) Int. Cl.: F16D 69/02

(54) **Method for manufacturing wet-type friction member**

(30) Priority: 05.08.2005 JP 2005228777
(71) Applicant: Dynax Corporation, Chitose-shi, Hokkaido (JP)
(72) Inventor: Tada, Hiroshi, Chitose-shi, Hokkaido (JP)
(74) Representative: Grünecker, Kinkeldey, Stockmair & Schwanhäusser Anwaltssozietät

(57) **Abstract**

A wet-type friction member (10) is formed by filling a surface layer of a non-woven fabric (20) with particles (32) and resin (42) to form a middle layer (12), drying and curing, filling a part (11) of the non-woven fabric from the side opposite from the surface layer with a mixture of a density modifier (31) and thermosetting resin (41), drying and curing, and thereafter, applying a mixture of a friction modifier (33) and thermosetting resin (41) to the surface of the non-woven fabric on the surface layer side, and again drying and curing. The middle layer (12) functions as a wall, so that the non-woven fabric can be filled with the density modifier (31) at a high density, and the friction modifier (33) can be applied and fixed evenly on the surface layer of a friction surface (15), thereby improving durability and frictional performance.

## Description

### TECHNICAL FIELD

This invention relates to a wet-type friction member and a method for manufacturing the same. A wet-type friction member is used mainly in a transmission or as a brake component in a motor vehicle or in industrial or construction machinery.

### BACKGROUND ART

A paper friction member comprising heat-resistant synthetic fiber has been conventional used for a wet-type friction member. The paper friction member is produced by blending a pulp with various friction modifiers, etc., forming a paper body, impregnating the paper body with a binding resin such as phenol resin and then curing it. A friction member obtained by this method has a high dynamic frictional coefficient. However, as machines utilizing these friction members become increasingly miniaturized and highly efficient, growing demands for improvement in durability leave existing paper friction members inadequate in some cases. In particular, since the paper friction member comprises fibers overlapping one another in layers, the fiber interlayer may be destroyed when the friction member bears excessive loads parallel to its friction surface. As a result, the friction member can fail to function properly.

On the other hand, non-woven fabric is known as a suitable material for obtaining improved strength in a friction member. Friction members using non-woven fabric as a base material are disclosed in unexamined Japanese Patent Publications No. 120163/2005 and 217790/2004 and in Japanese Patent No. 2767197.

Unexamined Japanese Patent Publication No. 120163/2005 discloses a wet-type friction member wherein a thermosetting resin comprising a friction modifier is impregnated into a non-woven fabric. The dispersion of the friction modifier in the non-woven fabric is adjusted so that the concentration of resin is high at the friction surface of the friction member, and lower towards the base.

Japanese Patent No. 2767197 discloses a wet-type friction member having a three-layered structure wherein a woven fabric is interposed between dry-type non-woven fabrics, so that non-woven and woven fabrics are three- dimensionally intertwined. This three-layered structure can be obtained by filling the surface with a friction modifier, generally impregnating thermosetting resin into all three layers, and forming the friction member base by compression. This wet-type friction member has the advantage of improved durability, and maintains high interlayer exfoliation strength even under the increased loads encountered in recent vehicle models having increased engine output.

The wet-type friction member disclosed in Unexamined Japanese Patent Publication No. 217790/2004 can be obtained by intertwining a dry-type non-woven fabric and a wet-type non-woven fabric, filling the fabric structure with a friction modifier from the wet-type non-woven fabric side, and forming a base in which a thermosetting resin is impregnated and cured with heat and compression. This wet-type friction member can bear the increased load without exfoliation of the interlayer, and high frictional coefficient as well as good thermal stability.

In the wet-type friction member in Unexamined Japanese Patent Publication No. 120163/2005, in which the concentration of the friction modifier in the non-woven fabric is high at the friction surface and lower towards the base, the part closer to the base, where the concentration of the friction modifier is low, comprises mainly fiber and thermosetting resin. As a result, this friction member can have the disadvantage of low compression or shear strength and inadequate durability. In addition, a high capital investment is required for devices, such as an ultrasonic wave transmitter and a vacuum aspirator, for dispersing the friction modifier inside the non-woven fabric.

Since the wet-type friction members in Japanese Patent No. 2767197and unexamined Japanese Patent Publication No. 217790/2004 are produced by intertwining plural pieces of non-woven or woven fabric, their manufacturing cost is high. Furthermore, their durability will soon need to be improved to accommodate the current trend toward increased engine output.

In view of the above problems, it is an object of the invention to provide a method of manufacturing a wet-type friction member which has excellent durability as well as frictional performance, and which can be produced at low cost.

### DISCLOSURE OF THE INVENTION

The invention solves the above-mentioned problems by utilization of a manufacturing method comprising the steps of filling a surface layer of a base material comprising a non-woven fabric with a composition including particles and a thermosetting resin, and drying and curing said composition; filling the base material, from a side opposite from said surface layer, with a second composition including a density modifier and a thermosetting resin, and drying and curing the second composition; and applying a third composition including a friction modifier and a thermosetting resin to said surface layer of said base material and drying and curing the third composition.

The non-woven fabric is preferably a dry-type non-woven fabric comprising any one of the following fibers: para aramid fibers, meta aramid fibers, carbon fibers, glass fibers, acryl oxidation fibers, kynol fibers, silica fibers, alumina fibers, silica alumina fibers or cellulose fibers; or a mixture of two or more of said fibers made by forming fibers into thin sheets by a spinning card, and then integrating the sheets by needle punching, stitch bonding or adhesion.

The filling weight of the composition comprising particles and a thermosetting resin is preferably in the range from 10 - 40 wt % of the weight of the non-woven fabric.

The filling weight of the composition comprising a density modifier and a thermosetting resin is preferably in the range from 10 -120 wt % of the weight of the non-woven fabric.

The content of the composition comprising a friction modifier and a thermosetting resin is preferably in the range from 5 - 60 wt % of the weight of the non-woven fabric.

The particles, the density modifier and the friction modifier are each preferably a materials from the group consisting of coke, graphite, diatomaceous earth, activated carbon, molybdenum disulfide, silica powder, metal powder or metal fiber, cashew dust, fluororesin powder, and phenol resin bead powder, and mixtures of two or more of said materials.

Each of the thermosetting resins is preferably a resin from the group consisting of phenol resin, denatured phenol resin, reformed oil, rubber, epoxy resin, melamine resin, polyimide resin unsaturated polyester resin and mixtures of two or more of said resins.

Since the first step in the manufacturing method is to fill a surface layer with a mixture of particles and resin, and then drying and curing the mixture, a layer is formed that will become an intermediate or "middle" layer in the final product. Thereafter, when the non-woven fabric is filled with the density modifier from the rear side the middle layer functions as a wall to prevent the density modifier from permeating through to the side where the friction modifier is applied. As a result, the non-woven fabric can be filled evenly, and to a high density, with the density modifier, thereby improving the durability of the viret-type friction member.

Similarly, when applying a friction modifier to the surface of the non-woven fabric, the middle layer again functions as a wall to prevent the friction modifier from permeating into the non-woven fabric. Consequently, the friction modifier can be applied and fixed evenly onto the surface of the non-woven fabric, improving the friction coefficient.

A high quality friction member can be produced in accordance with the invention at a lower manufacturing cost, since it is not necessary to intertwine plural pieces of non-woven fabric.

### BRIEF DESCRIPTION OF THE DRAWINGS

FIG. 1 is a cross-sectional view schematically showing the wet-type friction member obtained by the manufacturing method in accordance with the invention;
FIG. 2 is a graph comparing the kinetic frictional coefficients of a friction member according to the invention and a comparative example of a friction member;
FIG. 3 is a graph comparing the kinetic frictional coefficients of a friction member according to the invention and a comparative example of a friction member at different rotation speeds in oil at a temperature of 80 degrees Celsius; and
FIG. 4 is a graph comparing the kinetic frictional coefficients of a friction member according to the invention and a comparative example of a friction member at different rotation speeds in oil at a temperature of -30 degrees Celsius.

### BEST MODES FOR CARRYING OUT THE INVENTION

The invention will be explained in detail below.

In the manufacturing method according to the invention, a non-woven fabric is used as a base material. As a first step, a composition including particles in the form of a powder and a thermosetting resin is filled into the front surface of the non-woven fabric, that is, the surface on the side at which frictional sliding engagement takes place. The resin/powder composition is then dried and cured.

As a second step, another composition, including a density modifier and thermosetting resin, is filled into the rear side of the non-woven fabric, that is, the surface that is to be bonded to a metal supporting ring. This composition is then dried and cured. In this step, the density modifier is fixed on the fibers inside the non-woven fabric, thereby modifying the density inside the non-woven fabric.

As a third step, a composition including a friction modifier and thermosetting resin is applied to the front surface of the non-woven fabric, and is then dried and cured. In this step, the friction modifier is fixed on the fibers at the front surface of the non-woven fabric, and thereby forms a friction sliding surface.

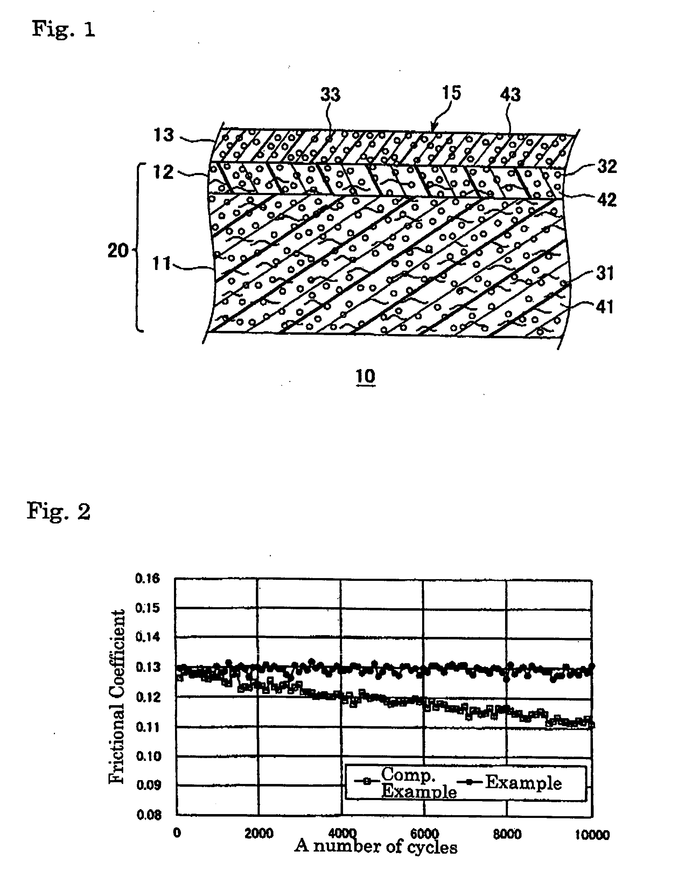

In Figure 1, which shows a wet-type friction member 10 obtained by the manufacturing method of this invention, a non-woven fabric 20 can be either dry-type or wet-type. However, the dry-type non-woven fabric is preferable. The dry-type non-woven fabric has superior strength as it can be formed from relatively long fibers. With the dry-type non-woven fabric, the base material can also be less dense, and a friction member having high porosity can be obtained.

The dry-type non-woven fabric can be composed of para aramid fibers, meta aramid fibers, carbon fibers, glass fibers, acryl oxidation fibers, kynol fibers, silica fibers, alumina fibers, silica alumina fibers or cellulose fibers, etc., or a mixture of two or more of these kinds of fibers. The fibers are formed into thin sheets by a spinning card, and then integrated by needle punching, stitch bonding or adhesion.

In addition, it is desirable that the fineness of the non-woven fabric 20 be in the range from 1 - 20 dtex, and that the length of the fiber be in the range from 30 - 70mm. When the fiber length is less than 30mm, the fibers do not intertwine with one another adequately, and therefore the shear strength and/or the tensile strength of the friction member will deteriorate. On the other hand, when the fiber length exceeds 70mm, the load on needles during needle punching becomes excessive, the required number of punching operations increases, and other problems, such as decreased smoothness of the non-woven fabric, may be encountered.

As seen in Figure 1, the middle layer 12 contains particles 32 in a thermosetting resin 42. Layer 13 is a friction modifying layer comprising a thermosetting resin 43 containing a friction modifier 33, and layer 11 is a density modifying layer comprising a thermosetting resin 41 containing a density modifier 31.

The density modifier 31, particles 32 and friction modifier 33 have different purposes and effects, and the compositions containing the particles 32 and the density modifier 31 are filled into the non-woven fabric 20, whereas the composition containing the friction modifier 33 is applied to the front surface of the filled non-woven fabric. Nevertheless, the density modifier, the particles, and the friction modifier can be all selected from substances such as coke, carbon particles such as graphite, diatomaceous earth, activated carbon, molybdenum disulfide, silica powder, inorganic powder substances such as metal particles or metal fibers, cashew dust, fluororesin powders, powdered organic substances such as phenol resin beads, etc. and a mixture of two or more of these substances.

When one or more of the aforementioned substances are used as the density modifier 31 or as the friction modifier 33, the average particle diameter is preferably in the range from 10µm to 500µm. When the average particle diameter is less than 10µm, the density becomes too low, and the compressive strength of the friction member deteriorates. In addition, when the average particle diameter is less than 10µm, the friction coefficient at the friction surface can become inadequate. On the other hand, when the average particle diameter exceeds 500µm, the density of the friction member becomes excessive and subject to deterioration by the effect of frictional heat. Also, when the particle diameter exceeds 500µm, the exfoliation strength of the friction member deteriorates.

When one or more of the aforementioned substances are used as particles 32 in the middle layer 12, the average particle diameter is preferably 100µm or less. When the average particle diameter exceeds 100µm, the "wall effect," whereby the particles are kept inside the non-woven fabric, may be reduced.

For the thermosetting resins 41, 42 and 43, which are used for filling the non-woven fabric 20 and for the applicant of the friction modifier layer 13, resins such as phenol resin, denatured polyester resin reformed by oil, rubber, epoxy resin, melamine resin, polyimide resin, unsaturated polyester resin, etc. or mixtures of two or more of such resins, may be used. These resins are used in liquid form, having an appropriate viscosity, so that they can be easily used to fill the inside the non-woven fabric 20, or applied as the surface layer 13. These resins can be supplied in liquid form and used directly, or they can be dissolved in, and diluted with, an appropriate solvent.

The process of manufacturing the wet-type friction member 10 will be explained below.

First, a composition including particle 32 and thermosetting resin 42 is filled into the surface layer of the non-woven fabric 20 by applying the composition to, and impregnating, the surface of the non-woven fabric 20. The resin/particle composition is then dried and cured to form the middle layer 12. The method of application of the resin/particle composition to the non-woven fabric is not particularly limited, and common methods such as spray coating, roll coating and die coating can be used. Preferably, the thickness of the middle layer 12, that is, the thickness of the composition impregnated into the surface layer of the non-woven fabric, is 10 - 25% of the thickness of the non-woven fabric. This middle layer 12 functions as a partition wall, separating the density modifier layer 11 and the friction modifier layer 13.

Preferably, the filling weight of the composition including particle 32 and thermosetting resin 42 is in the range from 10 - 40 wt % of the total weight of the non-woven fabric by itself. More specifically, the filling weight of particles 32 is preferably 6 - 24 wt % while the filling weight of thermosetting resin 42 is preferably 4 - 16 wt %.

When the filling weight of the composition including particles 32 and resin 42 is less than 10 wt %, it is unable to function as a wall to prevent permeation by the density modifier. In addition, when the filling weight of the composition exceeds 40 wt %, the porosity of the middle layer becomes low, which blocks the circulation of cooling oil.

After forming the middle layer 12 at the surface of the non-woven fabric 20, the density modifier layer 11 and the friction modifier layer 13 are formed as shown in Figure 1.

The density modifying layer 11 is formed by filling the non-woven fabric 20 from the back side by a composition including density modifier 31 and thermosetting resin 41. The composition is then dried and cured so that density modifier 31 becomes fixed to the fibers inside the non-woven fabric 20. As in the case of filling the layer 12 with the particle/resin composition, methods such as spray coating, roll coating and die coating can be used. It is desirable, however, to ensure that the density modifier 31 is dispersed evenly inside the non-woven fabric.

When the non-woven fabric is being filled with the composition including density modifier 31 and resin 41, the middle layer 12 functions as a wall to keep density modifier 31 inside the non-woven fabric and to prevent the density modifier 31 from permeating to the surface of the non-woven fabric. Therefore, the density modifying layer 11 can be filled evenly, and to a high density, and, as a result, the material fatigue strength and durability of the wet-type friction member 10 can be improved.

Preferably, the filling weight of the composition comprising density modifier 31 and thermosetting resin 41 is in the range from 10-120 wt % of the total weight of the non-woven fabric by itself. More specifically, the filling weight of density modifier 31 is 5-60 wt%, while the filling weight of thermosetting resin 41 is 5-60 wt%.

When the filling weight of the composition including density modifier 31 and resin 41 is less than 10 wt %, the layer 11 becomes insufficiently dense and the filling composition fails to improve the durability of the layer 11. When the filling weight of the composition exceeds 120 wt %, the density of the layer 11 becomes excessive, resulting in an excessive reduction of the air space inside the friction member, the airspace forming passages for the flow of oil which plays an important role in cooling by dissipation of frictional heat. Therefore, insufficient air space will result in inferior durability. Moreover, if the density of the layer 11 becomes excessively high due to the presence of large amounts the density modifying composition, the hardness of the friction member becomes excessive, resulting in unbalanced contact with a friction member-engaging surface, and impairment of the friction coefficient.

In view of the above considerations, it is desirable that the density of the density modifier layer 11, after being modified by filling with the density modifier composition, be in the range from 0.2 -0.6 g/cm³.

The friction modifying layer 13 is formed by applying the composition including friction modifier 33 and thermosetting resin 43 to the surface of the non-woven fabric 20 on the side where the middle layer 12 is formed. The composition is then dried and cured to let the friction modifier become fixed within the fibers on the surface of the non-woven fabric. For application of the friction modifier layer 13, common methods such as spray coating, roll coating and double coating can be used.

When friction modifier is applied, the middle layer 12 again functions as a wall, just like it did when filling the non-woven layer with density modifier. The middle layer acts to prevent the friction modifier 33 from permeating the non-woven fabric, so that friction modifier 33 is fixed only at the surface 15 which plays the most important role in establishing the friction properties of the friction member. In addition, since the friction modifier 33 is dispersed evenly on the surface 15, the area in contact with a friction member- engaging surface is increased, thereby improving the friction coefficient of the friction member.

Preferably, the weight of composition comprising friction modifier 33 and thermosetting resin 43 is in the range from 5 - 60 wt % of the total weight of the non-woven fabric by itself. More specifically, the filling weight of friction modifier 33 is 2.5 - 30 wt%, while the filling weight of thermosetting resin 43 is 2.5 - 30 wt %.

When the filling weight of the composition is less than 5 wt %, it does not improve the friction coefficient. When the filling weight of the composition exceeds 60 wt %, the friction modifier 33 does not intertwine with the fibers of the surface of the non-woven fabric 20 in the friction modifier layer 13, leaving some thick parts consisting only of the friction modifier 33. Therefore, the exfoliation strength of the friction modifier layer 13 deteriorates with the filling weight exceeds 60 wt%. Moreover, the pores of the friction modifier surface 15 of the wet-type friction member 10 may be buried. The burying of the pores makes it difficult to remove the oil film on the friction surface 15, causing a deterioration in the friction coefficient.

The invention will be explained concretely below, referring to Examples employing the wet-type friction member according to the invention in a synchronizer ring. Of course, the invention should not be considered limited to these examples.

### Example

A dry-type non-woven fabric with the thickness of 1.5 mm was produced by intertwining and integrating para aramid fibers (with a fiber length of 51 mm and a fiber diameter of 12 µm) with adjusted areal weight of 200g/m².

Then, a middle layer 12 was formed at the surface of the non-woven fabric by filling with a composition, consisting of 30 wt % of diatomaceous earth with a particle diameter of 40µm or less, 30 wt % of active carbon with a particle diameter of 75µm or less, and 40 wt % of epoxy emulsion resin. The mixture was stirred and mixed by a mixer, and filled into the surface of the non-woven fabric by means of a roller coater. The composition was then dried at 180 degrees Celsius for 8 minutes. The thickness of the middle layer 12 was adjusted to 0.3mm.

Next, a density modifier layer 11 was formed by filling the non-woven fabric layer from the back side with a composition, consisting of a mixture of 50 wt % of petroleum coke powder (as a density modifier) having a particle diameter of 100 - 250µm, and 50 wt % of phenol resin. The composition was applied to the back side of the non-woven fabric by spraying in order to fill the inside of the non-woven fabric. The composition was then dried at 80 degrees Celsius for 30 minutes. The density of the non-woven fabric, after modifying its density, was 0.2-0.6 g/cm³.

Next, a friction modifier layer 13 was formed by spraying a composition, consisting of a mixture of 50 wt % of petroleum coke powder (as a friction modifier) with particle diameter 100 - 250µm and 50 wt % of phenol resin, onto the surface of the non-woven fabric where the middle layer 12 was formed. The composition was dried at 200 degrees Celsius for 10 minutes. Consequently, an intermediate product in sheet form was obtained.

Thereafter, circular arc shaped members, each having an outer diameter of 276.5mm, an inside diameter of 269.2mm, and a developing angle of 43.9 degree, was stamped out of the intermediate product in sheet form using a press and a metal mold. This stamped-out circular arc shaped friction members were then bonded to the conic interior surface of a prearranged, ring-shaped, brass base material, which was then heat-pressed with actual bearing of 100kg/m² at 270 degrees Celsius for 90 seconds to produce a synchronizer ring.

### Comparative Example

55 parts by weight of porous graphite particles (50% or more of the total number of particles of which have a particle diameter of 44 - 250µm), 20 parts by weight of novolack-type phenol resin as thermosetting resin, 10 parts by weight of stainless fibers as metal fibers, and 15 parts by weight barium sulfate as inorganic particles were mixed by a mixer for 5 minutes to obtain a friction member composition. This friction member composition and a ring-shaped brass main body material were placed into a pre- shaped die and heated at 300 degrees Celsius to form and integrate a ring-shaped main body and a friction member layer, which was then kept at 300 degrees Celsius for 30 minutes. Thereafter, the internal circumference of the friction member layer was tapered to form grooves and lands on the internal circumference to complete a synchronizer ring.

The synchronizer rings produced were tested as follows by using a synchronizer testing machine.

### Simple frictional abrasion test

The synchronizer ring was pressed against a taper-shaped mating member, made of SCM420, with a 90kg force to stop the mating member. The inertia was 0.08kgf m/sec² and the rotating speed was 2,000 rpm in oil at 80 degrees Celsius. This process was repeated 10,000 times. In this test, the kinetic friction coefficient of the friction member of the synchronizer ring was recorded every 100 times from the 200th to the 10,000th time. The results of the kinetic frictional coefficient tests on the example according to the invention, and the comparative example, are shown in Figure 2.

In addition, axial abrasion of the friction member of the synchronizer ring was measured after the simple frictional abrasion test. The measured values were recognized as friction member abrasion loss. The abrasion loss of the friction member according to the example of the invention was 0.10mm, while that of the friction member of a comparative example was 0.12mm.

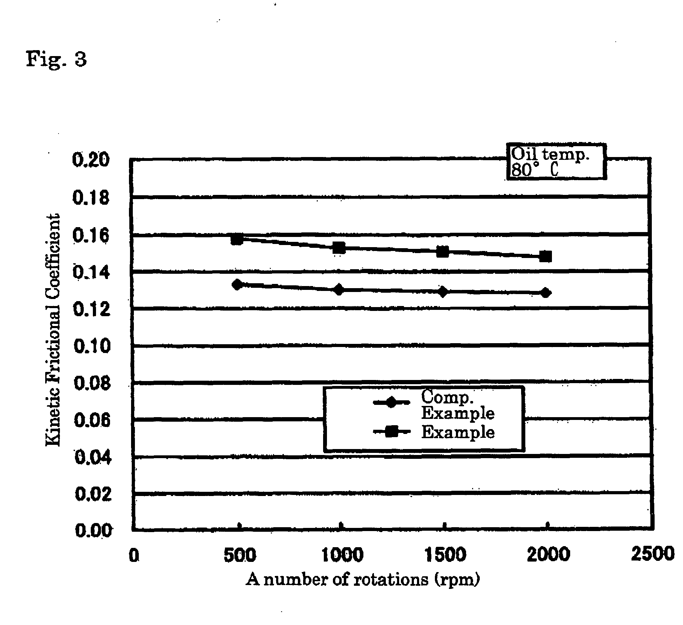

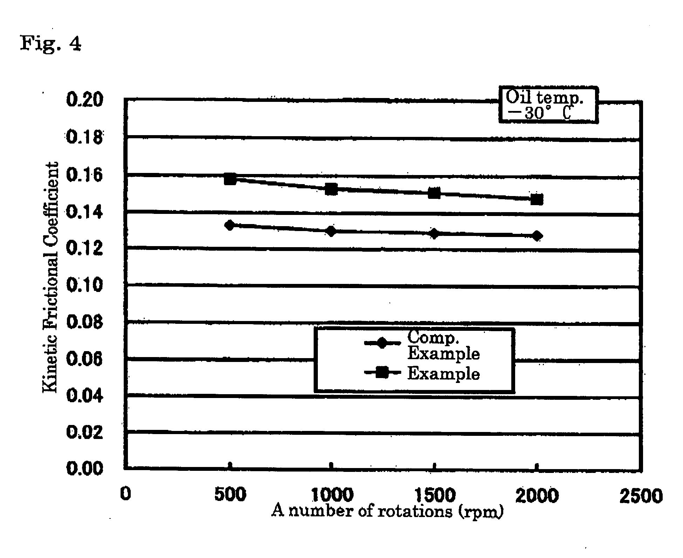

In addition, under the same testing condition as described above, the kinetic friction coefficient was measured when the rotating speed of the mating member was 500, 1000, 1500 and 2000 rpm in oil at 80 degrees Celsius. The friction coefficient was measured respectively at the 10,000th time, and the results are shown in Figure 3. The kinetic frictional coefficient, was also measured for the same rotating speeds in oil at -30 degrees Celsius, at the 10,000th time. The results are shown in Figure 4.

It can be seen in Figure 2, when comparing results at the beginning and the end of the simple frictional abrasion test, that the wet-type friction member of the invention does not exhibit a decrease in frictional coefficient. On the other hand the kinetic frictional coefficient of the comparative example deteriorated over time. As mentioned previously, the example according to the invention exhibited a lower abrasion loss than that of the comparative example.

In addition, it can be seen in Figure 3 that the kinetic friction coefficient of the example according to the invention was around 0.153 at the 10,000th time in oil at 80 degrees Celsius and at rotational speeds from 500 to 2000 rpm. The kinetic friction coefficient of the example was higher than that of the comparative example, which had a kinetic frictional coefficient of around 0.130 under the same conditions.

Moreover, it can be seen in Figure 4 that the kinetic friction coefficient of the example according to the invention was around 0.155 at the 10,000th time in oil at -30 degrees Celsius and at rotational speeds from 500 to 2000 rpm. Under the same conditions, the kinetic friction coefficient of the comparative example was around 0.128.

As a result of the above tests, it is clear that the wet-type friction member obtained by the method of the invention has high stability, ensuring repeating use over a long period of time, and a high kinetic frictional coefficient which is not affected by oil temperature. This wet-type friction member, therefore, has a variety of potential applications.

Although the friction member of the invention was employed in a synchronizer ring in the examples, its use is not limited to synchronizer rings, and it can be used for other transmission or brake components.

## Claims

1. A method for manufacturing a wet-type friction member, comprising the steps of:
filling a surface layer of a base material comprising a non-woven fabric with a composition including particles and a thermosetting resin, and drying and curing said composition;
filling the base material, from a side opposite from said surface layer, with a second composition including a density modifier and a thermosetting resin, and drying and curing the second composition; and
applying a third composition including a friction modifier and a thermosetting resin to said surface layer of said base material and drying and curing the third composition.

2. A method for manufacturing a wet-type friction member according to claim 1, wherein said non-woven fabric is a dry-type non-woven fabric comprising any one of the following fibers: para aramid fibers, meta aramid fibers, carbon fibers, glass fibers, acryl oxidation fibers, kynol fibers, silica fibers, alumina fibers, silica alumina fibers or cellulose fibers; or a mixture of two or more of said fibers made by forming fibers into thin sheets by a spinning card, and then integrating the sheets by needle punching, stitch bonding or adhesion.

3. A method for manufacturing a wet-type friction member as claimed in claims 1 or 2, wherein the filling weight of said composition including particles and a thermosetting resin is in the range from 10 - 40 wt % of the weight of said non-woven fabric.

4. A method for manufacturing a wet-type friction member as claimed in any one of claims 1 to 3, wherein the filling weight of said composition including a density modifier and a thermosetting resin is in the range from 10 -120 wt % of the weight of said non-woven fabric.

5. A method for manufacturing a wet-type friction member as claimed in any one of claims 1 to 4, wherein the content of said composition including a friction modifier and a thermosetting resin is in the range from 5 - 60 wt % of the weight of said non-woven fabric.

6. A method for manufacturing a wet-type friction member as claimed in any one of claims 1 to 5, wherein said particles, said density modifier and said friction modifier are materials selected from the group consisting of coke, graphite, diatomaceous earth, activated carbon, molybdenum disulfide, silica powder, metal powder or metal fiber, cashew dust, fluororesin powder, and phenol resin bead powder, or a mixture of two or more of said materials.

7. A method for manufacturing a wet-type friction member as claimed in any one of claims 1 to 6, wherein said thermosetting resin is a resin selected from the group consisting of phenol resin, denatured phenol resin, reformed oil, rubber, epoxy resin, melamine resin, polyimide resin unsaturated polyester resin or a mixture of two or more of said resins.
